# EUROPEAN PATENT SPECIFICATION

(11) **EP 4 407 310 B1**
(45) Date of publication and mention of the grant of the patent: **08.07.2026**
(21) Application number: 22956798.7
(22) Date of filing: 30.08.2022
(51) Int. Cl.: G01N 33/00, G01N 9/24, G01B 15/02, G01N 23/06, B05C 11/02, B05C 5/02, B05C 11/10

(54) **DEVICE FOR ELECTRODE PLATE TESTING**
EINRICHTUNG ZUR ELEKTRODENPLATTENPRÜFUNG
DISPOSITIF POUR TESTER UNE PLAQUE D'ÉLECTRODE

(43) Date of publication of application: 31.07.2024
(73) Proprietor: Contemporary Amperex Technology (Hong Kong) Limited, Central, Central And Western District (HK)
(72) Inventor: ZHAN, Bingyang, Ningde, Fujian 352100 (CN); ZHANG, Jingdong, Ningde, Fujian 352100 (CN); CHEN, Weigang, Ningde, Fujian 352100 (CN); ZHEN, Zhihui, Ningde, Fujian 352100 (CN); WANG, Qiangjun, Ningde, Fujian 352100 (CN); YAN, Liangjie, Ningde, Fujian 352100 (CN); WU, Qian, Ningde, Fujian 352100 (CN)
(74) Representative: Gong, Jinping
(86) International application number: PCT/CN2022/115848
(87) International publication number: WO 2024/044966

(56) References cited:
- EP-A1- 0 233 389
- CN-A- 1 962 102
- CN-A- 1 991 345
- CN-A- 102 698 921
- CN-A- 107 582 089
- CN-A- 109 225 766
- CN-A- 109 550 642
- CN-A- 109 550 642
- CN-A- 110 940 684
- JP-A- 2006 090 892
- US-A- 5 727 604
- US-B1- 6 204 507

## Description

### TECHNICAL FIELD

This application relates to the field of battery technologies, and particularly to a device for electrode plate testing as specified in claim 1.

### BACKGROUND

Energy conservation and emission reduction are key to the sustainable development of the automotive industry. In this regard, electric vehicles have become an important part of the sustainable development of the automotive industry due to their energy-saving and environmentally friendly advantages. For electric vehicles, battery technologies are an important factor that affects their development.

Typically, a battery is composed of a plurality of battery cells, and each battery cell includes an electrode assembly. The electrode assembly consists of a positive electrode plate and a negative electrode plate, and electric energy is generated by the migration of metal ions between the positive electrode plate and the negative electrode plate. The quality of the electrode plate is related to the performance and safety of the battery, making it necessary to test the electrode plate.

JP 2006 090892 A discloses an apparatus and method for measuring coated sheet, using X-ray transmission method. US6204507 discloses an apparatus for plate testing which comprises a radiation source and a probe array including a collimator comprising a plurality of baffles.

### SUMMARY

This application provides a device for electrode plate testing that can effectively perform full-zone areal density testing on an electrode plate material. The invention is defined by the appended claims.

According to a first aspect, a device for electrode plate testing is provided. The device includes: a radiation mechanism, the radiation mechanism being configured to emit a ray towards an electrode plate, where the ray is set along a width direction of the electrode plate to cover the electrode plate, and scan the electrode plate along a length direction of the electrode plate; and a probe mechanism, the probe mechanism and the radiation mechanism being disposed opposite on two sides of the electrode plate, where the probe mechanism is configured to monitor a signal transmitted through the electrode plate, and the signal is used to test the areal density of a material applied on a surface of the electrode plate. During a testing process, the radiation mechanism and the probe mechanism remain stationary, and the electrode plate moves along its length direction.

In the device for electrode plate testing according to an embodiment of this application, the ray is used to perform areal density testing on the electrode plate. The device includes the radiation mechanism and the probe mechanism that are disposed opposite on the two sides of the electrode plate. The ray emitted by the radiation mechanism is set along the width direction of the electrode plate to cover the electrode plate, and scan the electrode plate along the length direction of the electrode plate, so that the probe mechanism tests, based on the signal transmitted through the electrode plate, the areal density of the material applied on the surface of the electrode plate. The width direction of the electrode plate is covered with the ray, and therefore, areal scanning is performed on the electrode plate, allowing for two-dimensional distribution of the areal density in the width direction of the electrode plate to be obtained. Compared with a single-point testing method, this greatly improves testing precision and sampling rate.

In an embodiment, the device further includes a support frame, where the support frame is provided with a window, the window being perpendicular to the length direction, and on two opposite edges of the window, the probe mechanism and the radiation mechanism being respectively fixed with a spacing therebetween, so that the electrode plate passes between the radiation mechanism and the probe mechanism through the spacing. Use of a hollow-square shaped support frame to fix the probe mechanism and the radiation mechanism provides a simple and stable structure. The support frame may be made of a material such as marble. A marble material has no stress deformation, and features a small linear swelling coefficient and good stability.

According to the present invention, the radiation mechanism includes: a radiation source configured to generate the ray; and a first housing, the first housing being configured to accommodate the radiation source, where an open window is provided on a surface of the first housing facing towards the probe mechanism, and the open window is configured to transmit the ray. Placing the radiation source inside the first housing provides effective protection for the radiation source.

According to the present invention, the radiation mechanism further includes: a first collimator, the first collimator being disposed between the radiation source and the electrode plate to collimate the ray emitted by the radiation source. Because the ray emitted by the radiation mechanism diverts at a certain solid angle, through filtering of the first collimator, the ray can irradiate the surface of the electrode plate with maximum efficiency, so that effective testing is performed on the electrode plate.

According to the present invention, the first collimator includes a plurality of baffles, the plurality of baffles being arranged along the width direction and perpendicular to the surface of the electrode plate. Use of the plurality of baffles forms a plurality of collimation units, providing a simple structure and effectively guiding the ray to various positions on the surface of the electrode plate along its width direction.

In an embodiment, a beam cross-section of the radiation source has sizes W1 and L1 in the width direction and the length direction, respectively, where 20 mm ≤ L1 ≤ 50 mm, and/or 200 mm ≤ W1 ≤ 1500 mm. These ranges can meet testing requirements for electrode plates of most sizes.

In an embodiment, each baffle of the plurality of baffles in the first collimator has sizes d and H1 in the width direction and a thickness direction of the electrode plate, respectively, where 0.2 mm ≤ d ≤ 1 mm, and/or 1 mm ≤ H1 ≤ 5 mm. When d and H1 are within the foregoing ranges, structural stability of the first collimator and effective guidance of the ray are ensured, resulting in optimal testing performance.

In an embodiment, in the width direction, both the first baffle and the last baffle among the plurality of baffles are spaced apart from an edge of the open window by d/2; and/or in the length direction, both two ends of the plurality of baffles are spaced apart from the edge of the open window by d/2. This fully utilizes the first collimator to collimate the ray emitted from an emission window of the radiation source on the first housing.

According to the present invention, the probe mechanism includes: a probe array, the probe array including M rows × N columns of probes, where the M rows of probes are arranged in the width direction, and the N columns of probes are arranged in the length direction, where M and N are positive integers; and a second housing, where the probe array is disposed on a wall of the second housing facing towards the radiation mechanism. The probe array composed of a plurality of probes disposed on the wall of the second housing facing towards the radiation mechanism, this allows the second housing to provide support and protection for the probes.

In an embodiment, 1 ≤ N ≤ 10, and/or 5 ≤ M ≤ 150. When the number of probes in the width direction and the length direction of the electrode plate is within the foregoing ranges, testing precision is ensured without additional costs incurred.

In an embodiment, a spacing between two adjacent probes in the probe array is d, where 0.2 mm ≤ d ≤ 1 mm. The spacing between the two adjacent probes is equal to thickness of the baffle in the first collimator, allowing for efficient utilization of each probe's sensing area and effective reception of the ray transmitted through the first collimator, thereby improving the signal reception efficiency.

According to the present invention, the probe mechanism further includes: a second collimator, the second collimator being disposed between the electrode plate and the probe array to collimate the signal transmitted through the electrode plate. A direction of the signal transmitted through the electrode plate changes, and each collimation unit in the second collimator can guide the ray transmitted through a corresponding area of the electrode plate to the corresponding probe, thereby effectively testing various areas in the width direction of the electrode plate.

According to the present invention, the second collimator includes a plurality of baffles, the plurality of baffles being arranged along the width direction and perpendicular to the surface of the electrode plate. Use of the plurality of baffles forms the plurality of collimation units, providing a simple structure and effectively guiding the signal transmitted through the electrode plate to the corresponding probe.

In an embodiment, a distance between two adjacent baffles of the plurality of baffles in the second collimator is twice the distance between two adjacent baffles of the plurality of baffles in the first collimator. A relationship between the distance between two adjacent baffles in the second collimator and the distance between two adjacent baffles in the first collimator, or in other words, a relationship between the number of baffles in the second collimator and the number of baffles in the first collimator, is used to balance the number of probes as well as testing precision.

In an embodiment, a signal receiving window of each probe in the probe array has sizes W2 and L2 in the width direction and the length direction, respectively, where 1 mm ≤ W2 ≤ 20 mm, and/or 1 mm ≤ L2 ≤ 40 mm. A smaller probe size results in higher testing precision, but also increases the number of probes for a same testing area. When the probe size is within the foregoing ranges, both testing precision and the number of probes can be balanced.

In an embodiment, each baffle of the plurality of baffles in the second collimator has sizes d and H2 in the width direction and the thickness direction of the electrode plate, respectively, where 0.2 mm ≤ d ≤ 1 mm, and/or 1 mm ≤ H2 ≤ 5 mm. When d and H2 are within the foregoing ranges, structural stability of the second collimator and effective guidance of a transmitted signal can be ensured, resulting in optimal testing performance.

In an embodiment, in the thickness direction of the electrode plate, a distance between the probe mechanism and the radiation mechanism is less than or equal to 15 mm. A distance that is too far would affect quantity of signals received by the probe mechanism, while a distance that is too close would affect movement of the electrode plate between the probe mechanism and the radiation mechanism. When the distance is within the foregoing range, it provides sufficient space for the electrode plate and other components such as a collimator, while also ensuring quantity of the signal received by the probe, thereby reducing a testing error caused by air quality, temperature, humidity, dust, and the like.

In an embodiment, the device further includes a coating mechanism, where the coating mechanism is configured to coat the surface of the electrode plate with the material. Therefore, the device can perform coating on one side of the electrode plate and testing on the other side.

In an embodiment, the coating mechanism includes a coating roller configured to support the electrode plate; M coating heads, where the M coating heads are arranged in the width direction and disposed on a side of the coating roller farther away from the support frame, and the M coating heads are respectively connected to M outlets, where the coating heads are configured to deliver the material to the corresponding outlets, so that the material is applied on the surface of the electrode plate through the outlets. Since the M coating heads are configured corresponding to the M probes in the width direction, amount of the material applied by the M coating heads on the electrode plate can be respectively adjusted in a closed-loop manner based on testing results of the M probes, thereby improving coating consistency.

In an embodiment, the M coating heads respectively correspond to the M rows of probes in the probe array of the probe mechanism, and the coating mechanism further includes: M adjustment portions disposed corresponding to the M coating heads, where the adjustment portion is configured to adjust size of the outlet connected to the corresponding coating head based on the areal density tested by the corresponding probe. The sizes of the M outlets are respectively controlled by the M adjustment portions, and the M adjustment portions can respectively control the sizes of the M outlets based on the testing results of the M probes, thereby improving coating consistency in the width direction of the electrode plate.

In an embodiment, the adjustment portion includes an adjustment block and a driving apparatus thereof, where the driving apparatus is configured to drive the adjustment block to move in the thickness direction of the electrode plate to adjust the size of the outlet connected to the corresponding coating head through the adjustment block. Use of the adjustment block and the driving apparatus thereof enables adjustment of the size of the outlet of the coating head, resulting in a simple structure with high accuracy.

In an embodiment, a part of the adjustment block in contact with the material has sizes W3 and L3 in the width direction and the length direction, respectively, where 10 mm ≤ W3 ≤ 30 mm, and/or 5 mm ≤ L3 ≤ 20 mm. Appropriately setting the size of the part in contact with the material on the adjustment block can ensure uniform coating while reducing the number of the adjustment blocks.

In an embodiment, L3 is an integer multiple of L2, where L2 is size of the signal receiving window of each probe in the probe array in the length direction. When L3 is an integer multiple of L2, adjustment amount of the outlet matches the signal receiving window of each probe, facilitating feedback adjustment of the size of the outlet based on the testing result of the probe.

In an embodiment, a moving distance of the driving apparatus in the thickness direction of the electrode plate is less than or equal to 200 mm. The moving distance corresponds to the size of the outlet of the coating head. When the moving distance is within the foregoing range, it satisfies a variation range of the areal density of the electrode plate after coating while reducing space occupied.

In an embodiment, the device further includes a first transfer roller and a second transfer roller, where the first transfer roller and the second transfer roller are respectively disposed on two sides of the support frame in the length direction, and the first transfer roller and the second transfer roller are configured to support the electrode plate. By using the first transfer roller and the second transfer roller, the electrode plate is supported on both sides of the support frame, allowing the electrode plate to pass smoothly between the probe mechanism and the radiation mechanism, ensuring effective testing.

In an embodiment, a distance between the first transfer roller and the second transfer roller is less than or equal to 800 mm, providing better support for the electrode plate.

In an embodiment, the ray is an X-ray or a β-ray, which has strong penetration and is easy to obtain.

In an embodiment, a power range of the X-ray is from 200 mCi to 5000 mCi, and/or a power range of the β-ray is from 12 W to 20 kW. This meets a requirement for electrode plate testing while reducing power consumption and minimizing damage to the electrode plate.

### BRIEF DESCRIPTION OF DRAWINGS

To describe the technical solutions of the embodiments of this application more clearly, the following briefly describes the accompanying drawings required for describing the embodiments of this application. Apparently, the accompanying drawings described below show merely some embodiments of this application, and persons of ordinary skill in the art may still derive other drawings from the accompanying drawings without creative efforts.
FIG. 1 is a schematic diagram of conventional areal density testing of an electrode plate;
FIG. 2 is a three-dimensional diagram of a device for electrode plate testing according to an embodiment of this application;
FIG. 3 is a top view of a device for electrode plate testing according to an embodiment of this application;
FIG. 4 is a side view of a device for electrode plate testing according to an embodiment of this application;
FIG. 5 is a schematic diagram of an assembly relationship between a radiation mechanism, a probe mechanism, and a support frame according to an embodiment of this application;
FIG. 6 is a three-dimensional diagram of a radiation mechanism according to an embodiment of this application;
FIG. 7 is a side view of a radiation mechanism according to an embodiment of this application;
FIG. 8 is a schematic diagram of a first collimator and a second collimator according to an embodiment of this application;
FIG. 9 is a three-dimensional diagram of a probe mechanism according to an embodiment of this application;
FIG. 10 is a side view of a probe mechanism according to an embodiment of this application;
FIG. 11 is a schematic diagram of a coating mechanism according to an embodiment of this application;
FIG. 12 is a schematic diagram of a coating head and an adjustment portion thereof according to an embodiment of this application; and
FIG. 13 is a schematic diagram of a size of a contact zone between an adjustment block and a material.

The accompanying drawings are not drawn to scale.

### DESCRIPTION OF EMBODIMENTS

The following further describes the implementations of this application in detail with reference to the accompanying drawings and embodiments. The detailed description of embodiments and the accompanying drawings are intended to illustrate the principle of this application, rather than to limit the scope of this application, meaning this application is not limited to the embodiments described herein.

In the description of this application, it should be noted that unless otherwise stated, "a plurality of" means at least two; and the orientations or positional relationships indicated by the terms "upper", "lower", "left", "right", "inside", "outside", and the like are merely for ease and brevity of description of this application rather than indicating or implying that the device or components mentioned must have specific orientations or must be constructed or manipulated according to particular orientations. These terms shall therefore not be construed as limitations on this application. In addition, the terms "first", "second", "third", and the like are merely for the purpose of description and shall not be understood as any indication or implication of relative importance. "Perpendicular" is not perpendicular in the strict sense but within an allowable range of error. "Parallel" is not parallel in the strict sense but within an allowable range of error.

The orientation terms appearing in the following description all are directions shown in the figures, and do not limit the specific structure of this application. In the description of this application, it should also be noted that unless otherwise specified and defined explicitly, the terms "mount", "connect", and "join" should be understood in their general senses. For example, they may refer to a fixed connection, a detachable connection, or an integral connection, and may refer to a direct connection or an indirect connection via an intermediate medium. Persons of ordinary skill in the art can understand specific meanings of these terms in this application based on specific situations.

In the embodiments of this application, like reference signs denote like components, and for brevity, in different embodiments, detailed descriptions of like components are not repeated. It should be understood that as shown in the accompanying drawings, sizes such as thickness, length, and width of various components and sizes such as thickness, length, and width of integrated devices in the embodiments of this application are merely for illustrative purposes and should not constitute any limitations on this application.

The battery mentioned in the embodiments of this application is a single physical module that includes one or more battery cells for providing a higher voltage and capacity. For example, the battery mentioned in this application may include a battery module, a battery pack, or the like. A battery typically includes a box configured to enclose one or more battery cells. The box can prevent liquids or other foreign matter from affecting charging or discharging of the battery cell.

The battery cell may include an electrode assembly and an electrolyte. The electrode assembly includes a positive electrode plate, a negative electrode plate, and a separator. The battery cell mainly relies on migration of metal ions between the positive electrode plate and the negative electrode plate to work. The positive electrode plate includes a positive electrode current collector and a positive electrode active substance layer. The positive electrode active substance layer is applied on a surface of the positive electrode current collector, and a current collector uncoated with the positive electrode active substance layer protrudes from the current collector coated with the positive electrode active substance layer and serves as a positive tab. A lithium-ion battery is used as an example, for which, the positive electrode current collector may be made of aluminum and the positive electrode active substance may be lithium cobaltate, lithium iron phosphate, ternary lithium, lithium manganate, or the like. The negative electrode plate includes a negative electrode current collector and a negative electrode active substance layer. The negative electrode active substance layer is applied on a surface of the negative electrode current collector. A current collector not coated with the negative electrode active substance layer protrudes from the current collector coated with the negative electrode active substance layer and serves as a negative tab. The negative electrode current collector may be made of copper, and the negative electrode active substance may be graphite, carbon, silicon, or the like. To allow a large current to pass through without any fusing, a plurality of positive tabs are provided and stacked together, and a plurality of negative tabs are provided and stacked together. A material of the separator may be polypropylene (polypropylene, PP), polyethylene (polyethylene, PE), or the like. In addition, the electrode assembly may be a wound structure or a stacked structure. However, the embodiments of this application are not limited thereto.

Currently, in a production process of electrode plates of batteries such as lithium batteries, weight of a material applied on a surface of the electrode plate can be tested using a principle of ray penetration and absorption to obtain areal density of the surface of the electrode plate, thereby evaluating coating consistency. Specifically, after ray passes through a material under test applied on the surface of the electrode plate, intensity of the ray attenuates. With the intensity of the ray passing through the material determined, the areal density of the material under test can be calculated.

It should be understood that a term "electrode plate" as used in the embodiments of this application includes thin sheet-like materials in a lithium battery industry, such as a positive electrode plate, a negative electrode plate, a positive electrode current collector, a negative electrode current collector, and a separator material. The method for electrode plate testing according to the embodiments of this application can be used to test any one of the foregoing types of the electrode plate.

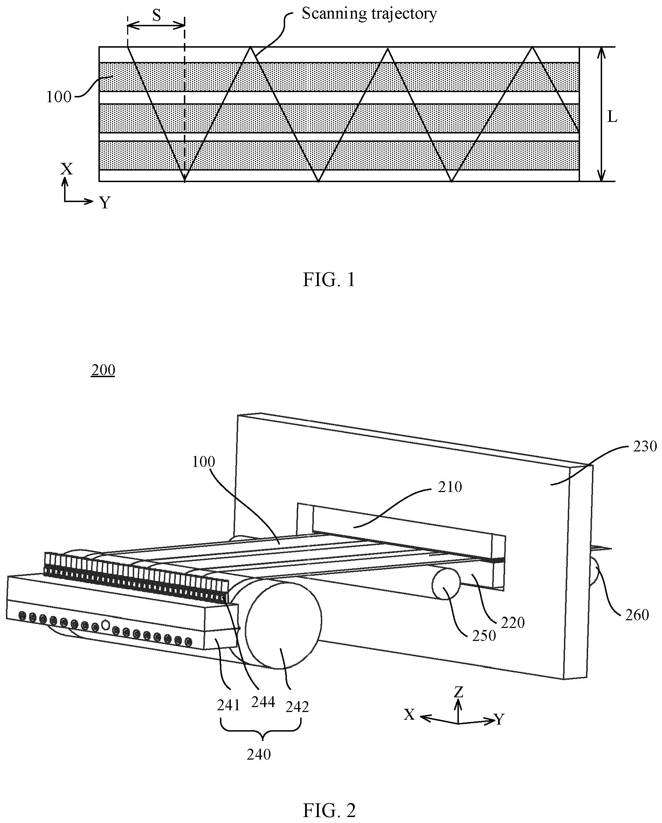

For example, in an areal density gauge shown in FIG. 1, a radiation source and a probe move along a horizontal direction, that is, a width direction X, of the electrode plate 100, and this is also known as transverse movement. The electrode plate 100 moves along its length direction Y, and this is also known as longitudinal movement. The radiation source reciprocates along the direction X to scan the surface of the electrode plate 100. It can be seen from FIG. 1 that due to speed stack in the transverse and longitudinal directions, all testing points follow a Z-shaped scanning trajectory on the surface of the electrode plate 100.

Distance traveled in one round-trip scan performed on the electrode plate 100 is S = 2 * L * V1 / V2, where L is width of the electrode plate 100, V1 is operation speed of the electrode plate 100, for example, 5-150 m/min, and V2 is scanning speed of the areal density gauge, for example, 1-24 m/min. As coating speed of the electrode plate 100 increases, distance S traveled by the areal density gauge in one round-trip scan performed on the electrode plate 100 increases, resulting in lower test coverage. Consequently, fluctuation in the weight of the material applied on the surface of the electrode plate 100 cannot be detected and fed back in a timely manner.

Currently, a gas ionization chamber is primarily used to test the ray passing through the electrode plate 100. Collection of the ray by the ionization chamber requires a certain integral time, and transverse resolution of the areal density is equal to a sum of a transverse size of a ray spot and a distance traveled during the integral time of the ionization chamber. Increasing the scanning speed of the areal density deteriorates the transverse resolution. A poorer transverse resolution is more inconducive to detecting fluctuation in the areal density of the electrode plate 100 within a small range in the transverse direction.

Additionally, movement of the electrode plate 100 itself generates vibration, and movement of the areal density gauge also generates vibration. To prevent the areal density gauge from scratching the electrode plate 100, a distance between the radiation source and the probe is relatively large, for example, 15-40 mm. A change in air weight, temperature, humidity, dust, and other factors causes an error to a measurement system.

An encoder can be used to record the electrode plate 100 and its scanning speed. The areal density at a corresponding position on the electrode plate 100 can be calculated through time fitting, and then fed back to a coating head. Due to a measurement error of the encoder in calculating speed, there is a position error in the calculated areal density of the electrode plate 100, and there is also an error in the areal density of a corresponding position of an adjustment portion that is fed back to the coating head, affecting determination for adjustment of the coating weight.

All these factors affect improvement of the areal density testing effect and consistency. In view of this, this application provides a high-resolution, high-precision, real-time, full-zone areal density measurement system that uses two-dimensional imaging instead of small spot detection and scanning to achieve real-time full-zone areal density testing of the electrode plate, with the transverse resolution being accurate up to 1-20 mm, such as 5 mm and 10 mm. Furthermore, because the radiation source and the probe in this application are static and do not need to move, static areal scanning is achieved, eliminating a position calculation error in the foregoing dynamic scanning and a measurement error caused by a change in air. One-to-one correspondence among the areal density, the physical position on the corresponding electrode plate, and the adjustment portion on the coating head, without a position error can further improve real-time performance of closed-loop feedback, thereby improving coating consistency of the electrode plate.

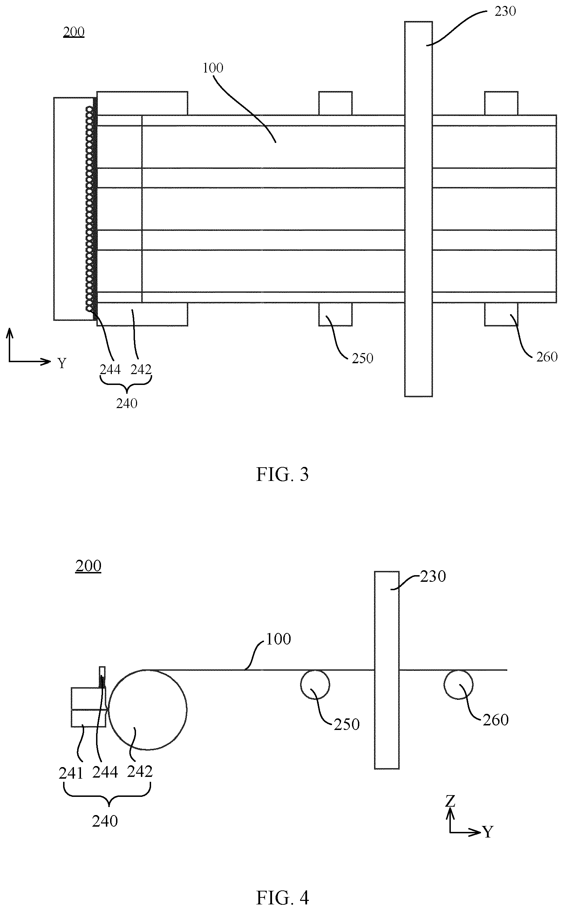

FIGs. 2 to 4 illustrate a device 200 for electrode plate testing according to an embodiment of this application, where FIG. 2 is a perspective schematic diagram of the device 200, FIG. 3 is a top view of the device 200, and FIG. 4 is a side view of the device 200.

As shown in FIG. 2, the device 200 includes a radiation mechanism 210 and a probe mechanism 220. The probe mechanism 220 and the radiation mechanism 210 are disposed opposite on the two sides of the electrode plate 100 along its thickness direction Z. The radiation mechanism 210 is configured to emit a ray to the electrode plate 100, where the ray is set along a width direction X of the electrode plate 100 to cover the electrode plate 100, and scan the electrode plate 100 along a length direction Y of the electrode plate 100; and the probe mechanism 220 is configured to monitor a signal transmitted through the electrode plate 100, and the signal is used to test the areal density of the material applied on a surface of the electrode plate 100.

It can be seen that in the embodiments of this application, the device 200 for electrode plate testing uses a ray to perform areal density testing on the electrode plate 100. The radiation mechanism 210 emits a ray that is set along the width direction X of the electrode plate 100 to cover the electrode plate 100, and scan the electrode plate 100 along the length direction Y of the electrode plate 100. The probe mechanism 220 tests the areal density of the material applied on the surface of the electrode plate 100 based on the signal transmitted through the electrode plate 100. By covering the width direction X of the electrode plate 100 with the ray, the device achieves areal scanning of the electrode plate 100, allowing for two-dimensional distribution of the areal density in the width direction X of the electrode plate 100 to be obtained. Compared with a single-point testing method, this greatly improves testing precision and sampling rate.

The ray emitted by the radiation mechanism 210 can be, for example, an X-ray or a β-ray, which has strong penetration and is easy to obtain. A power range of the X-ray is, for example, from 200 mCi to 5000 mCi, and preferably 1000 mCi; a power range of the β-ray is, for example, from 12 W to 20 kW, and preferably 500 kW. When power of the X-ray or the β-ray is within the foregoing ranges, it meets the testing requirement of the electrode plate 100 while reducing power consumption and minimizing damage to the electrode plate 100.

The ray emitted by the radiation mechanism 210 attenuates after it passes through the electrode plate 100. For example, a relationship between intensity of the ray passing through the electrode plate 100 and intensity of the signal transmitted through the electrode plate 100 satisfies I = I₀e^{-λm}, where I₀ is the intensity of the ray emitted by the radiation mechanism 210 and passing through the electrode plate 100, I is the intensity of the signal transmitted through the electrode plate 100, λ is a mass absorption coefficient of the material, and m is the areal density of the electrode plate 100. The probe mechanism 220 receives the signal transmitted through the electrode plate 100 and outputs a corresponding current signal. After the current signal is amplified by an amplifier, a voltage signal with a high signal-to-noise ratio is obtained. The voltage signal is converted into a digital signal by an ADC, so as to obtain testing data of the electrode plate 100. After data processing is performed on the testing data, distribution of the areal density of the electrode plate 100 in the width direction X can be obtained. It can be seen that a logarithm of the intensity of the signal transmitted through the electrode plate 100 is inversely proportional to the areal density, and use of the ray to perform areal density testing on the electrode plate 100 is easy to implement and highly accurate.

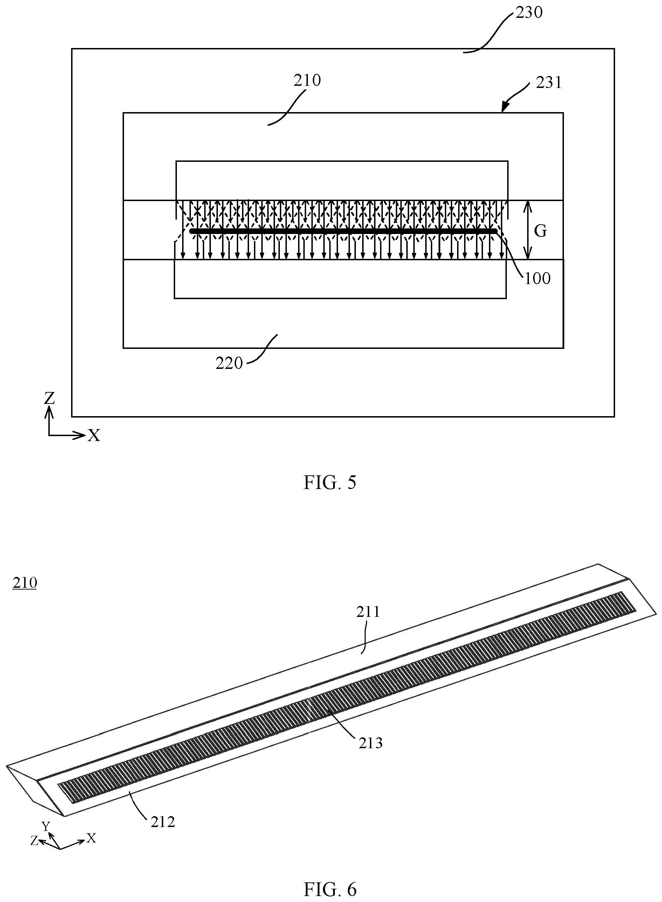

In an embodiment, the device 200 further includes a support frame 230 configured to fix the radiation mechanism 210 and the probe mechanism 220. For example, as shown in FIG. 5, the support frame 230 is provided with a window 231, the window 231 being perpendicular to the length direction Y, and on two opposite edges of the window 231, the probe mechanism 220 and the radiation mechanism 210 being respectively fixed with a spacing therebetween, so that the electrode plate 100 passes between the radiation mechanism 210 and the probe mechanism 220 through the spacing. Use of a hollow-square shaped support frame 230 to fix the probe mechanism 220 and the radiation mechanism 210 provides a simple and stable structure.

In the thickness direction Z of the electrode plate 100, distance G between the probe mechanism 220 and the radiation mechanism 210 is less than or equal to 15 mm, for example, 10 mm. The thickness direction Z is perpendicular to the width direction X and the length direction Y. Distance G that is too far would affect quality of a signal received by the probe mechanism 220, while distance G that is too close would affect movement of the electrode plate 100 between the probe mechanism 220 and the radiation mechanism 210. When the distance G is within the foregoing range, it provides sufficient space for the electrode plate and other components such as a collimator, while also ensuring quality of the signal received by the probe mechanism 220, thereby reducing a testing error caused by air quality, temperature, humidity, dust, and the like.

The support frame 230 may be made of a material such as marble. A marble material has no stress deformation, and features a small linear swelling coefficient, thus ensuring good stability.

In an embodiment, as shown in FIGs. 2 to 4, the device 200 further includes a coating mechanism 240, where the coating mechanism 240 is configured to coat the surface of the electrode plate 100 with the material. Therefore, the device 200 can perform coating on one side of the electrode plate 100 and testing on the other side.

In an embodiment, as shown in FIGs. 2 to 4, the device 200 further includes a first transfer roller 250 and a second transfer roller 260, where the first transfer roller 250 and the second transfer roller 260 are respectively disposed on two sides of the support frame 230 in the length direction Y, and the first transfer roller 250 and the second transfer roller 260 are configured to support the electrode plate 100. The first transfer roller 250 and the second transfer roller 260 are parallel to the support frame 230 and have a same horizontal height in the thickness direction Z. This ensures that the electrode plate 100 passing through surfaces of the first transfer roller 250 and the second transfer roller 260 remains parallel to the radiation mechanism 210 and the probe mechanism 220, and that the electrode plate 100 is centered on surfaces of the radiation mechanism 210 and the probe mechanism 220 in the width direction X.

By using the first transfer roller 250 and the second transfer roller 260, the electrode plate 100 is supported on both sides of the support frame 230, allowing the electrode plate 100 to pass smoothly between the probe mechanism 220 and the radiation mechanism 210, ensuring effective testing. A distance between the first transfer roller 250 and the second transfer roller 260 is, for example, less than or equal to 800 mm. This provides better support for the electrode plate 100.

The device 200 may also be connected to a control system with a peripheral supporting circuit and an industrial computer. During a testing process, the radiation mechanism 210 and the probe mechanism 220 remain stationary, and only the electrode plate 100 moves along its length direction Y. This eliminates the position calculation error in the foregoing dynamic scanning and the measurement error caused by the change in air.

The following, with reference to FIGs. 6 to 10, describes the radiation mechanism 210 and the probe mechanism 220 in detail.

According to the present invention, the radiation mechanism 210 includes the radiation source and a first housing 211. The radiation source is configured to generate the ray; and the first housing 211 is configured to accommodate the radiation source, where an open window 2121 is provided on a surface of the first housing 211 facing towards the probe mechanism 220, and the open window 2121 is configured to transmit the ray. Placing the radiation source inside the first housing 211 provides effective protection for the radiation source.

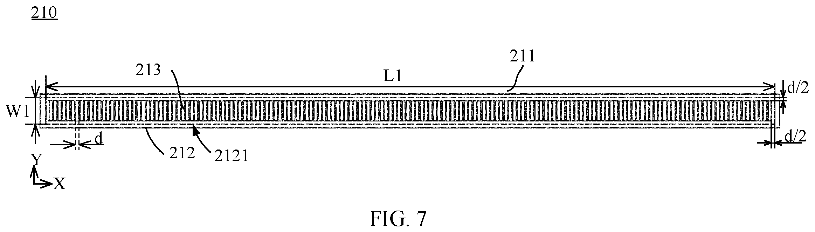

According to the present invention, as shown in FIGs. 6 and 7, the open window 2121 is provided on the surface of the first housing 211 facing towards the probe mechanism 220. Specifically, the first housing 211 may consist of a housing main body and an end cap 212. The radiation source is accommodated inside the housing main body, and the end cap 212 is configured to cover the radiation source inside the housing main body. The open window 2121 is provided on the end cap 212, allowing the ray emitted by the radiation source to pass through the open window 2121 and irradiate the surface of the electrode plate 100.

The number of the radiation source can be one or more. For example, a single radiation source may be used, or a plurality of elongated radiation sources arranged along the width direction X may be assembled together. When using the radiation mechanism 210 by assembling the plurality of radiation sources, intensity of the ray irradiating various testing areas in the width direction X of the electrode plate 100 is the same, resulting in better uniformity of testing.

According to the present invention, as shown in FIGs. 6 and 7, the radiation mechanism 210 further includes a first collimator 213, the first collimator 213 being disposed between the radiation source and the electrode plate 100. Projection of the first collimator 213 onto a surface of the first housing 211 facing towards the probe mechanism 220 is located within the open window 2121. Because the ray emitted by the radiation mechanism 210 diverts at a certain solid angle, through filtering of the first collimator 213, the ray can irradiate the surface of the electrode plate 100 with maximum efficiency, and effective testing on the electrode plate 100 can be realized.

According to the present invention, the first collimator 213 is composed of a plurality of baffles, the plurality of baffles being arranged along the width direction X and perpendicular to the surface of the electrode plate 100. Use of the plurality of baffles forms the plurality of collimation units, providing a simple structure and effectively guiding the ray generated by the radiation source to various positions on the surface of the electrode plate 100 along its width direction X. The baffle is in a form of a thin sheet and can also be referred to as a partition sheet.

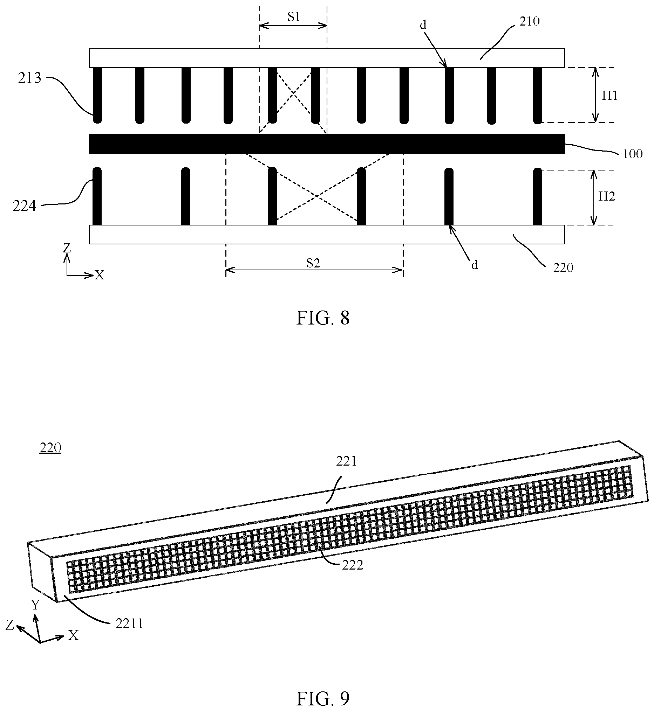

FIG. 8 shows the first collimator 213 formed by the plurality of baffles between the radiation mechanism 210 and the electrode plate 100. As shown in FIG. 8, the intensity of the ray emitted by the radiation source gradually decreases from center to periphery. The ray is filtered by a front collimator 213 and irradiate the surface of the electrode plate 100 at a certain angle, covering the electrode plate 100 along the width direction X. Each pair of two adjacent baffles of the plurality of baffles form a collimation unit, and an area on the electrode plate 100 surface irradiated by the ray passing through each collimation unit has a size of S1 in the width direction X.

In an embodiment, as shown in FIG. 7, a beam cross-section of the radiation source has sizes W1 and L1 in the width direction X and the length direction Y, respectively, where W1 can be selected based on width of the electrode plate to be tested, and L1 can be selected based on desired testing precision. For example, 20 mm ≤ L1 ≤ 50 mm, and/or 200 mm ≤ W1 ≤ 1500 mm, which can meet testing requirements for electrode plates of most sizes.

In an embodiment, as shown in FIGs. 7 and 8, each baffle of the plurality of baffles in the first collimator 213 has sizes d and H1 in the width direction X and the thickness direction Z of the electrode plate, respectively, where 0.2 mm ≤ d ≤ 1 mm, and/or 1 mm ≤ H1 ≤ 5 mm. When d and H1 are within the foregoing ranges, structural stability of the first collimator 213 and effective guidance of the ray are ensured, resulting in optimal testing performance.

In an embodiment, in the width direction X, both the first baffle and the last baffle among the plurality of baffles of the first collimator 213 are spaced apart from an edge of the open window 2121 by d/2; and/or in the length direction Y, both two ends of the plurality of baffles of the first collimator 213 are spaced apart from the edge of the open window 2121 by d/2. This fully utilizes the first collimator 213 to collimate the ray emitted from the open window 2121 on the first housing 211.

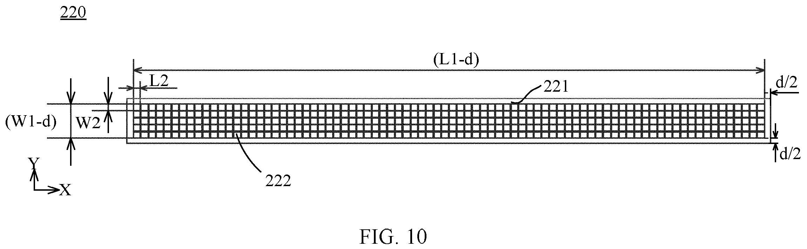

According to the present invention, as shown in FIGs. 9 and 10, the probe mechanism 220 includes a second housing 221 and a probe array. The probe array including M rows × N columns of probes 222, where the M rows of probes are arranged in the width direction X, and the N columns of probes are arranged in the length direction Y, where M and N are positive integers. The probe array is disposed on a wall 2211 of the second housing 221 facing towards the radiation mechanism 210. Each of the M rows × N columns of probe units has its own testing area, and each probe unit is configured to monitor the signal transmitted through the corresponding area on the electrode plate 100. The probe array composed of a plurality of probes 222 is disposed on the wall 2211 of the second housing 221 facing towards the radiation mechanism 210, this allows the second housing 221 to provide support and protection for the probes 222.

More probes 222 in the probe array means higher testing precision. However, this also leads to increased costs and structural complexity. In the embodiments of this application, a range of N can be, for example, 1 ≤ N ≤ 10, preferably 3 or 5; and a range of M can be, for example, 5 ≤ M ≤ 150, preferably 20 or 80. When the number of probes in the width direction X and the length direction Y of the electrode plate 100 is within the foregoing ranges, testing precision is ensured without incurring additional costs and structural complexity.

According to the present invention, as shown in FIGs. 9 and 10, the probe mechanism 220 further includes a second collimator 224, the second collimator 224 being disposed between the electrode plate 100 and the probe array to collimate the signal transmitted through the electrode plate 100. A direction of the signal transmitted through the electrode plate 100 changes, and each collimation unit in the second collimator 224 can guide the ray transmitted through a corresponding area of the electrode plate 100 to the corresponding probe 222, thereby effectively testing various areas in the width direction of the electrode plate 100.

According to the present invention, the second collimator 224 is composed of a plurality of baffles, the plurality of baffles being arranged along the width direction X and perpendicular to the surface of the electrode plate 100. Use of the plurality of baffles forms the plurality of collimation units, providing a simple structure and effectively guiding the signal transmitted through the electrode plate 100 to the corresponding probe 222. The baffle is in a form of a thin sheet and can also be referred to as a partition sheet.

FIG. 8 also shows the second collimator 224 formed by the plurality of baffles between the probe mechanism 220 and the electrode plate 100. As shown in FIG. 8, each pair of two adjacent baffles of the plurality of baffles forms a collimation unit, and each of the plurality of collimation units corresponds to one of the plurality of probes 222 in the probe array. The signal transmitted through the electrode plate 100 passes through each collimation unit and then is received by the corresponding probe 222. In other words, the plurality of collimation units guide the signals transmitted through various areas on the electrode plate 100 respectively to the corresponding plurality of probes 222, and the plurality of probes 222 are configured to monitor the signals transmitted through the various areas on the electrode plate 100. Each collimation unit can filter out the signal transmitted through an area other than the testing area corresponding to its respective probe. A size of the testing area in the width direction X is S2, and the testing areas corresponding to adjacent probes 222 can either overlap or not.

Each probe 222 receives the signal transmitted through its testing area after the signal passes through the second collimator 224. Each probe 222 converts signal intensity into a weak current signal. By using a multi-channel parallel computing method, the current signal output by each probe 222 is input to an amplifier and converted into a voltage signal with a high signal-to-noise ratio. The voltage signal is then converted into a digital signal through analog-to-digital conversion, and intensity I of the ray passing through the material under test on the surface of the electrode plate 100 is obtained.

A spacing between two adjacent probes 222 in the probe array is d, where 0.2 mm ≤ d ≤ 1 mm. The spacing between the two adjacent probes 222 is equal to thickness of the baffle in the first collimator 213, allowing for efficient utilization of each probe's sensing area and effective reception of the ray transmitted through the first collimator 213, thereby improving the signal reception efficiency.

A relationship between distance between two adjacent baffles in the second collimator 224 and distance between two adjacent baffles in the first collimator 213, or in other words, a relationship between the number of baffles in the second collimator 224 and the number of baffles in the first collimator 213, is used to balance the number of probes 222 as well as testing precision. For example, as shown in FIG. 8, a distance between two adjacent baffles of the plurality of baffles in the second collimator 224 is twice the distance between two adjacent baffles of the plurality of baffles in the first collimator 213.

As shown in FIG. 10, a signal receiving window of each probe 222 in the probe array has sizes W2 and L2 in the width direction X and the length direction Y, respectively. A range of W2 can be, for example, 1 mm ≤ W2 ≤ 20 mm, and preferably W2 is 10 mm. A range of L2 can be, for example, 1 mm ≤ L2 ≤ 40 mm, and preferably L2 is 10 mm. A smaller size of the probe 222 results in higher testing precision, but also increases the number of probes for a same testing area. When the size of the probe 222 is within the foregoing ranges, both testing precision and the number of probes can be balanced. In this case, an area of an emission window of the collimation unit formed by two adjacent baffles of the first collimator 213 is (W1-d) × [(L2-d)/2], and an area of an emission window formed by two adjacent baffles of the second collimator 214 is (W1-d) × L2.

The size of the receiving window of the probe array is same as the size of the ray emission window of the radiation source, which are both (W1-d) × (L1-d), where W1 = (W2+d) × N, and L1 = (L2+d) × M. The size of the ray emission window of the radiation source herein is the size of the first collimator.

In an embodiment, as shown in FIGs. 8 and 10, each baffle of the plurality of baffles in the second collimator 224 has sizes d and H2 in the width direction X and the thickness direction Z, respectively, where 0.2 mm ≤ d ≤ 1 mm, and/or 1 mm ≤ H2 ≤ 5 mm. When d and H2 are within the foregoing ranges, structural stability of the second collimator 224 and effective guidance of a transmitted signal can be ensured, resulting in optimal testing performance.

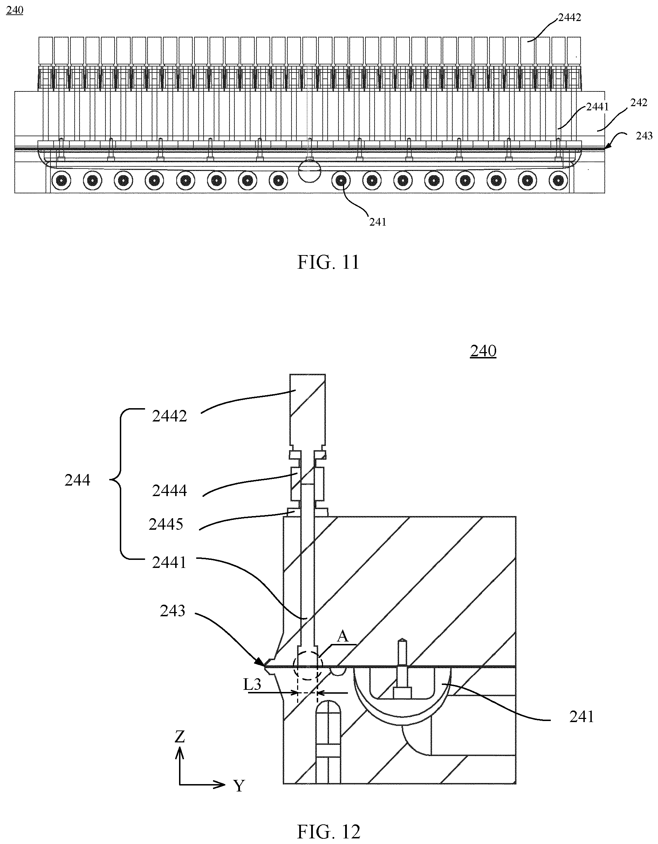

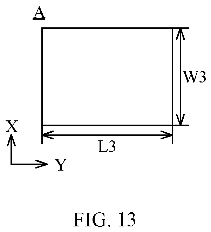

The following, in conjunction with FIGs. 11 to 13, describes in detail the coating mechanism 240 in the embodiments of this application. FIGs. 11 and 12 show structures of a coating head 241 and an adjustment portion 244 thereof of the coating mechanism 240 in the embodiments of this application. FIG. 13 is an enlarged view of area A in FIG. 12, showing a size of a part of the adjustment block 2441 in the adjustment portion 244 in contact with the material. As can be seen from FIGs. 2 to 4, the coating mechanism 240 includes a coating roller 242 and M coating heads 241. The coating roller 242 is configured to support the electrode plate 100, and the M coating heads 241 are arranged in the width direction X and disposed on a side of the coating roller 242 farther away from the support frame 230. The M coating heads 241 are respectively connected to M outlets 243, and each coating head 241 is configured to deliver the material to the corresponding outlet 243, so that the material is applied on the surface of the electrode plate 100 through the outlet 243.

The M coating heads 241 respectively correspond to the M rows of probes in the probe array of the probe mechanism 220. Since the M coating heads are configured corresponding to the M probes in the width direction, amount of the material applied by the M coating heads on the electrode plate 100 can be respectively adjusted in a closed-loop manner based on testing results of the M probes, thereby improving coating consistency.

In an embodiment, as shown in FIGs. 11 and 12, the coating mechanism 240 further includes M adjustment portions 244 which are set corresponding to the M coating heads 241. Each adjustment portion 244 is configured to adjust the size of the outlet 243 connected to the corresponding coating head 241 based on the areal density tested by the corresponding probe 222. The sizes of the M outlets 243 are respectively controlled by the M adjustment portions 244, and the M adjustment portions 244 can respectively control the sizes of the M outlets 243 based on the testing results of the M probes 222, thereby realizing closed-loop automatic adjustment of the areal density of the electrode plate 100 and improving coating consistency in the width direction X of the electrode plate 100.

In an embodiment, as shown in FIGs. 11 and 12, the adjustment portion 244 includes an adjustment block 2441 and a driving apparatus 2442 thereof. The driving apparatus 2442 is configured to drive the adjustment block 2441 to move in the thickness direction Z to adjust the size of the outlet 243 connected to the corresponding coating head 241 through the adjustment block 2441. Use of the adjustment block 2441 and the driving apparatus 2442 thereof enables adjustment of the size of the outlet 243, resulting in a simple structure with high accuracy. The driving apparatus 2442 can be, for example, a motor.

In addition, the adjustment portion 244 further includes a conversion slider 2444 and a fixed seat 2445, among others. In a state shown in FIG. 12, the adjustment block 2441 is in a raised position, and the size of the outlet 243 is maximized. An axis of the driving apparatus 2442 and the conversion slider 2444 can be connected by a high-precision thread, such that when the driving apparatus 2442 rotates by a certain angle, the conversion slider 2444 slides along the fixed seat 2445, converting rotary motion into linear motion through the high-precision thread. The conversion slider 2444 is fixed to a connecting rod of the adjustment block 2441 by a thread, so that the adjustment block 2441 moves up and down together with the conversion slider 2444, achieving a purpose of adjusting the size of the outlet 243.

In an embodiment, a part of the adjustment block 2441 in contact with the material has sizes W3 and L3 in the width direction X and the length direction Y, respectively. A range of W3 can be, for example, 10 mm ≤ W3 ≤ 30 mm, preferably W3 = 10 mm; and a range of L3 can be, for example, 5 mm ≤ L3 ≤ 20 mm, preferably L3 = 20 mm. Appropriately setting the size of the part in contact with the material on the adjustment block 2441 can ensure uniform coating while reducing the number of the adjustment blocks 2441. The adjustment block 2441 may be rectangular, diamond-shaped, or step-shaped, among others.

L3 is usually greater than or equal to L2, preferably L3 is an integer multiple of L2, where L2 is the size of the signal receiving window of each probe 222 in the probe array in the length direction Y. When L3 is an integer multiple of L2, adjustment amount of the outlet 243 matches the signal receiving window of each probe, facilitating feedback adjustment of the size of the outlet 243 based on the testing result of the probe 222.

A moving distance of the driving apparatus 2442 in the thickness direction Z is, for example, less than or equal to 200 mm. The moving distance corresponds to the size of the outlet 243 in the thickness direction Z. When the moving distance is within the foregoing range, it satisfies a variation range of the areal density of the electrode plate 100 after coating while reducing space occupied.

As can be seen, the device 200 for electrode plate testing provided in the embodiments of this application can perform real-time full-zone testing on the areal density of the electrode plate 100 during a coating process. As the electrode plate 100 passes over a surface of the coating roller 260, a slurry output from the outlet 243 is applied on the surface of the electrode plate 100. Then, when the electrode plate 100 moves between the radiation mechanism 210 and the probe mechanism 220, the radiation mechanism 210 covers the width direction X of the electrode plate 100 to obtain two-dimensional testing data along the width direction X of the electrode plate 100. Based on the testing data, feedback adjustment of the size of the outlet 243 can be performed through the adjustment portion 244 to improve consistency of the areal density of the electrode plate 100 along the width direction X. The driving apparatus 2442 controls up and down height of the adjustment block 2441, thereby changing the size of the outlet 243 using upward and downward movement of the adjustment block 2441. When the size of the outlet 243 decreases, slurry flow rate decreases, coating weight on the electrode plate 100 decreases, and the areal density of a corresponding area decreases. When the size of the outlet 243 increases, slurry flow rate increases, coating weight on the electrode plate 100 increases, and the areal density of a corresponding area increases. In this way, the areal density of a local area of the electrode plate 100 can be adjusted.

It should be noted that under a non-conflict condition, the various embodiments described in this application and/or technical features of the embodiments can be arbitrarily combined. A technical solution obtained after such combination should also fall within the scope of protection of this application.

Persons of ordinary skill in the art will appreciate that the units and algorithm steps of various examples described with reference to the embodiments disclosed in this specification can be implemented by using electronic hardware or a combination of computer software and electronic hardware. Whether the functions are executed by hardware or software depends on particular applications and design constraints of the technical solutions. Persons skilled in the art can employ a different method to implement the described functions for each particular application, but such implementations shall not be construed as going beyond the scope of this application.

It will be clearly understood by persons skilled in the art that for ease and brevity of description, for a detailed operating process of the foregoing system, apparatus, or unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiments are merely illustrative. For example, the unit division is merely logical function division and other division manners may be used in actual implementation. For example, a plurality of units or components may be combined or integrated into another system, or some features may be ignored or not be performed. In addition, the displayed or discussed mutual couplings, direct couplings or communication connections may be indirect couplings or communication connections through some interfaces, apparatuses or units, and may be in electrical, mechanical, or other forms.

The units described as separate parts may or may not be physically separate. Parts displayed as units may or may not be physical units, meaning they may be located in one position or distributed on a plurality of network units. Some or all of the units may be selected depending on actual requirements to achieve the objectives of the solutions of the embodiments.

## Claims

1. A device (200) for electrode plate testing, said device (200) comprising:
a radiation mechanism (210), the radiation mechanism (210) being configured to emit a ray to an electrode plate (100), wherein the ray is set along a width direction (X) of the electrode plate (100) so as to cover the electrode plate (100), and scan the electrode plate (100) along a length direction (Y) of the electrode plate (100); and
a probe mechanism (220), the probe mechanism (220) and the radiation mechanism (210) being disposed opposite on two sides of the electrode plate (100), wherein the probe mechanism (220) is configured to monitor a signal transmitted through the electrode plate (100), and the signal is used to test areal density of a material applied on a surface of the electrode plate (100),
wherein the radiation mechanism (210) comprises:
a radiation source configured to generate the ray; and
a first housing (211), the first housing (211) being configured to accommodate the radiation source, wherein an open window (2121) is provided on a surface of the first housing (211) facing towards the probe mechanism (220), and the open window (2121) is configured to transmit the ray;
a first collimator (213), the first collimator (213) being disposed between the radiation source and the electrode plate (100) to collimate the ray emitted by the radiation source, wherein the first collimator (213) comprises a plurality of baffles, the plurality of baffles being arranged along the width direction (X) and perpendicular to the surface of the electrode plate (100),
and wherein the probe mechanism (220) comprises:
a probe array, the probe array comprising M rows × N columns of probes (222), wherein the M rows of probes (222) are arranged in the width direction (X), and the N columns of probes (222) are arranged in the length direction (Y), wherein M and N are positive integers; and
a second housing (221), wherein the probe array is disposed on a wall (2211) of the second housing (221) facing towards the radiation mechanism (210),
a second collimator (224), the second collimator (224) being disposed between the electrode plate (100) and the probe array to collimate the signal transmitted through the electrode plate (100);
wherein the second collimator (224) comprises a plurality of baffles, the plurality of baffles being arranged along the width direction (X) and perpendicular to the surface of the electrode plate (100),
wherein during a testing process, the radiation mechanism (210) and the probe mechanism (220) remain stationary, and the electrode plate (100) moves along its length direction (Y).

2. The device (200) according to claim 1, **characterized in that** the device (200) further comprises a support frame (230), wherein the support frame (230) is provided with a window (231), the window (231) being perpendicular to the length direction (Y), and on two opposite edges of the window (231), the probe mechanism (220) and the radiation mechanism (210) being respectively fixed with a spacing therebetween, so that the electrode plate (100) passes between the radiation mechanism (210) and the probe mechanism (220) through the spacing; and preferably,
**characterized in that** the support frame (230) is made of marble.

3. The device (200) according to claim 1 or 2, **characterized in that** a beam cross-section of the radiation source has sizes W1 and L1 in the width direction (X) and the length direction (Y), respectively, wherein 20 mm ≤ L1 ≤ 50 mm, and/or 200 mm ≤ W1 ≤ 1500 mm.

4. The device (200) according to one of claims 1 to 3, **characterized in that** each baffle of the plurality of baffles in the first collimator (213) has sizes d and H1 in the width direction (X) and a thickness direction (Z) of the electrode plate (100), respectively, wherein 0.2 mm ≤ d ≤ 1 mm, and/or 1 mm ≤ H1 ≤ 5 mm,
preferably,
**characterized in that** in the width direction (X), both the first baffle and the last baffle among the plurality of baffles are spaced apart from an edge of the open window (2121) by d/2, and/or in the length direction (Y), both two ends of the plurality of baffles are spaced apart from the edge of the open window (2121) by d/2.

5. The device (200) according to one of claims 1 to 4, **characterized in that** 1 ≤ N ≤ 10, and/or 5 ≤ M ≤ 150.

6. The device (200) according to one of claims 1 to 5, **characterized in that** a spacing between two adjacent probes (222) in the probe array is d, wherein 0.2 mm ≤ d ≤ 1 mm.

7. The device (200) according to one of claims 1 to 6, **characterized in that** a distance between two adjacent baffles of the plurality of baffles in the second collimator (224) is twice the distance between two adjacent baffles of the plurality of baffles in the first collimator (213).

8. The device (200) according to any one of claims 5 to 7, **characterized in that** a signal receiving window of each probe (222) in the probe array has sizes W2 and L2 in the width direction (X) and the length direction (Y), respectively, wherein 1 mm ≤ W2 ≤ 20 mm, and/or 1 mm ≤ L2 ≤ 40 mm;
and/or
**characterized in that** each baffle of the plurality of baffles in the second collimator (224) has sizes d and H2 in the width direction (X) and the thickness direction (Z) of the electrode plate (100), respectively, wherein 0.2 mm ≤ d ≤ 1 mm, and/or 1 mm ≤ H2 ≤ 5 mm.

9. The device (200) according to any one of claims 1 to 8, **characterized in that** in the thickness direction (Z) of the electrode plate (100), a distance between the probe mechanism (220) and the radiation mechanism (210) is less than or equal to 15 mm.

10. The device (200) according to any one of claims 1 to 9, **characterized in that** the device (200) further comprises a coating mechanism (240), wherein the coating mechanism (240) is configured to coat the surface of the electrode plate (100) with the material.

11. The device (200) according to claim 10, **characterized in that** the coating mechanism (240) comprises:
a coating roller (242) configured to support the electrode plate (100); and
M coating heads (241), wherein the M coating heads (241) are arranged in the width direction (X) and disposed on a side of the coating roller (242) farther away from the support frame (230), and the M coating heads (241) are respectively connected to M outlets (243), wherein the coating heads (241) are configured to deliver the material to the corresponding outlets (243), so that the material is applied on the surface of the electrode plate (100) through the outlets (243).

12. The device (200) according to claim 11, **characterized in that** the M coating heads (241) correspond to the M rows of probes (222) in the probe array of the probe mechanism (220), and the coating mechanism (240) further comprises:
M adjustment portions (244) disposed corresponding to the M coating heads (241), wherein the adjustment portion (244) is configured to adjust size of the outlet (243) connected to the corresponding coating head (241) based on the areal density tested by the corresponding probe (222).

13. The device (200) according to claim 12, **characterized in that** the adjustment portion (244) comprises an adjustment block (2441) and a driving apparatus (2442) thereof, wherein the driving apparatus (2442) is configured to drive the adjustment block (2441) to move in the thickness direction (Z) of the electrode plate (100) to adjust the size of the outlet (243) connected to the corresponding coating head (241) through the adjustment block (2441);
preferably,
**characterized in that** a part of the adjustment block (2441) in contact with the material has sizes W3 and L3 in the width direction (X) and the length direction (Y), respectively, wherein 10 mm ≤ W3 ≤ 30 mm, and/or 5 mm ≤ L3 ≤ 20 mm;
more preferably,
**characterized in that** L3 is an integer multiple of L2, wherein L2 is size of the signal receiving window of each probe (222) in the probe array in the length direction (Y).

14. The device (200) according to claim 13, **characterized in that** a moving distance of the driving apparatus (2442) in the thickness direction (Z) of the electrode plate (100) is less than or equal to 200 mm.

15. The device (200) according to any one of claims 1 to 14 **characterized in that** the device (200) further comprises a first transfer roller (250) and a second transfer roller (260), wherein the first transfer roller (250) and the second transfer roller (260) are respectively disposed on two sides of the support frame (230) in the length direction (Y), and the first transfer roller (250) and the second transfer roller (260) are configured to support the electrode plate (100),
preferably,
**characterized in that** a distance between the first transfer roller (250) and the second transfer roller (260) is less than or equal to 800 mm;
and/or
**characterized in that** the ray is an X-ray or a β-ray;
preferably,
**characterized in that** a power range of the X-ray is from 200 mCi to 5000 mCi, and/or a power range of the β-ray is from 12 W to 20 kW.

## Patentansprüche

1. Einrichtung (200) zur Elektrodenplattenprüfung, wobei die Einrichtung (200) Folgendes umfasst:
einen Abstrahlmechanismus (210), wobei der Abstrahlmechanismus (210) konfiguriert ist, einen Strahl zu einer Elektrodenplatte (100) abzustrahlen, und der Strahl in einer Breitenrichtung (X) der Elektrodenplatte (100) derart eingestellt ist, dass er die Elektrodenplatte (100) abdeckt und die Elektrodenplatte (100) in einer Längsrichtung (Y) der Elektrodenplatte (100) abtastet; und
einen Sondenmechanismus (220), wobei der Sondenmechanismus (220) und der Abstrahlmechanismus (210) auf zwei Seiten der Elektrodenplatte (100) gegenüberliegend angeordnet sind, der Sondenmechanismus (220) konfiguriert ist, ein Signal zu überwachen, das durch die Elektrodenplatte (100) durchgelassen wird, und das Signal verwendet wird, um eine Flächendichte eines Materials zu prüfen, das auf eine Oberfläche der Elektrodenplatte (100) aufgebracht ist,
wobei der Abstrahlmechanismus (210) Folgendes umfasst:
eine Strahlungsquelle, die konfiguriert ist, den Strahl zu erzeugen;
ein erstes Gehäuse (211), wobei das erste Gehäuse (211) konfiguriert ist, die Strahlungsquelle aufzunehmen, ein offenes Fenster (2121) auf einer Oberfläche des ersten Gehäuses (211) bereitgestellt ist, die dem Sondenmechanismus (220) zugewandt ist, und das offene Fenster (2121) konfiguriert ist, den Strahl durchzulassen; und
einen ersten Kollimator (213), wobei der erste Kollimator (213) zwischen der Strahlungsquelle und der Elektrodenplatte (100) angeordnet ist, um den Strahl zu kollimieren, der durch die Strahlungsquelle abgestrahlt wird, der erste Kollimator (213) mehrere Ablenkplatten umfasst und die mehreren Ablenkplatten in der Breitenrichtung (X) und senkrecht zur Oberfläche der Elektrodenplatte (100) angeordnet sind,
wobei der Sondenmechanismus (220) Folgendes umfasst:
eine Sondenanordnung, wobei die Sondenanordnung M Zeilen × N Spalten von Sonden (222) umfasst, die M Zeilen von Sonden (222) in der Breitenrichtung (X) angeordnet sind, die N Spalten von Sonden (222) in der Längsrichtung (Y) angeordnet sind und M und N positive ganze Zahlen sind;
ein zweites Gehäuse (221), wobei die Sondenanordnung an einer Wand (2211) des zweiten Gehäuses (221) angeordnet ist, die dem Abstrahlmechanismus (210) zugewandt ist, und
einen zweiten Kollimator (224), wobei der zweite Kollimator (224) zwischen der Elektrodenplatte (100) und der Sondenanordnung angeordnet ist, um das Signal, das durch die Elektrodenplatte (100) durchgelassen wird, zu kollimieren;
wobei der zweite Kollimator (224) mehrere Ablenkplatten umfasst und die mehreren Ablenkplatten in der Breitenrichtung (X) und senkrecht zur Oberfläche der Elektrodenplatte (100) angeordnet sind und
während eines Prüfprozesses der Abstrahlmechanismus (210) und der Sondenmechanismus (220) ortsfest bleiben und die Elektrodenplatte (100) sich in ihrer Längsrichtung (Y) bewegt.

2. Einrichtung (200) nach Anspruch 1, **dadurch gekennzeichnet, dass** die Einrichtung (200) ferner einen Trägerrahmen (230) umfasst, wobei der Trägerrahmen (230) mit einem Fenster (231) versehen ist, das Fenster (231) senkrecht zur Längsrichtung (Y) ist und an zwei gegenüberliegenden Kanten des Fensters (231) der Sondenmechanismus (220) und der Abstrahlmechanismus (210) jeweils mit einem Zwischenraum dazwischen befestigt sind, derart, dass die Elektrodenplatte (100) zwischen dem Abstrahlmechanismus (210) und dem Sondenmechanismus (220) durch den Zwischenraum verläuft; und
bevorzugt **dadurch gekennzeichnet, dass** der Trägerrahmen (230) aus Marmor hergestellt ist.

3. Einrichtung (200) nach Anspruch 1 oder 2, **dadurch gekennzeichnet, dass** ein Strahlquerschnitt der Strahlungsquelle die Größen W1 und L1 in der Breitenrichtung (X) bzw. der Längsrichtung (Y) aufweist, wobei 20 mm ≤ L1 ≤ 50 mm und/oder 200 mm ≤ W1 ≤ 1500 mm.

4. Einrichtung (200) nach einem der Ansprüche 1 bis 3, **dadurch gekennzeichnet, dass** jede Ablenkplatte der mehreren Ablenkplatten im ersten Kollimator (213) Größen d und H1 in der Breitenrichtung (X) bzw. einer Dickenrichtung (Z) der Elektrodenplatte (100) aufweist, wobei 0,2 mm ≤ d ≤ 1 mm und/oder 1 mm ≤ H1 ≤ 5 mm,
bevorzugt **dadurch gekennzeichnet, dass** in der Breitenrichtung (X) sowohl die erste Ablenkplatte als auch die letzte Ablenkplatte unter den mehreren Ablenkplatten von einer Kante des offenen Fensters (2121) um d/2 beabstandet ist und/oder in der Längsrichtung (Y) beide zwei Enden der mehreren Ablenkplatten von der Kante des offenen Fensters (2121) um d/2 beabstandet sind.

5. Einrichtung (200) nach einem der Ansprüche 1 bis 4, **gekennzeichnet durch** 1 ≤ N ≤ 10 und/oder 5 ≤ M ≤ 150.

6. Einrichtung (200) nach einem der Ansprüche 1 bis 5, **dadurch gekennzeichnet, dass** ein Zwischenraum zwischen zwei benachbarten Sonden (222) in der Sondenanordnung d ist, wobei 0,2 mm ≤ d ≤ 1 mm.

7. Einrichtung (200) nach einem der Ansprüche 1 bis 6, **dadurch gekennzeichnet, dass** eine Entfernung zwischen zwei benachbarten Ablenkplatten der mehreren Ablenkplatten im zweiten Kollimator (224) das Zweifache der Entfernung zwischen zwei benachbarten Ablenkplatten der mehreren Ablenkplatten im ersten Kollimator (213) ist.

8. Einrichtung (200) nach einem der Ansprüche 5 bis 7, **dadurch gekennzeichnet, dass** ein Signalempfangsfenster jeder Sonde (222) in der Sondenanordnung Größen W2 und L2 in der Breitenrichtung (X) bzw. der Längsrichtung (Y) aufweist, wobei 1 mm ≤ W2 ≤ 20 mm und/oder 1 mm ≤ L2 ≤ 40 mm; und/oder
**dadurch gekennzeichnet, dass** jede Ablenkplatte der mehreren Ablenkplatten im zweiten Kollimator (224) Größen d und H2 in der Breitenrichtung (X) bzw. der Dickenrichtung (Z) der Elektrodenplatte (100) aufweist, wobei 0,2 mm ≤ d ≤ 1 mm und/oder 1 mm ≤ H2 ≤ 5 mm.

9. Einrichtung (200) nach einem der Ansprüche 1 bis 8, **dadurch gekennzeichnet, dass** in der Dickenrichtung (Z) der Elektrodenplatte (100) eine Entfernung zwischen dem Sondenmechanismus (220) und dem Abstrahlmechanismus (210) kleiner oder gleich 15 mm ist.

10. Einrichtung (200) nach einem der Ansprüche 1 bis 9, **dadurch gekennzeichnet, dass** die Einrichtung (200) ferner einen Beschichtungsmechanismus (240) umfasst, wobei der Beschichtungsmechanismus (240) konfiguriert ist, die Oberfläche der Elektrodenplatte (100) mit dem Material zu beschichten.

11. Einrichtung (200) nach Anspruch 10, **dadurch gekennzeichnet, dass** der Beschichtungsmechanismus (240) Folgendes umfasst:
eine Beschichtungswalze (242), die konfiguriert ist, die Elektrodenplatte (100) zu tragen; und
M Beschichtungsköpfe (241), wobei die M Beschichtungsköpfe (241) in der Breitenrichtung (X) angeordnet sind und auf einer Seite der Beschichtungswalze (242) angeordnet sind, die weiter vom Trägerrahmen (230) entfernt ist, und die M Beschichtungsköpfe (241) jeweils mit M Auslässen (243) verbunden sind, wobei die Beschichtungsköpfe (241) konfiguriert sind, das Material zu den entsprechenden Auslässen (243) zu übermitteln, derart, dass das Material durch die Auslässe (243) auf die Oberfläche der Elektrodenplatte (100) aufgebracht wird.

12. Einrichtung (200) nach Anspruch 11, **dadurch gekennzeichnet, dass** die M Beschichtungsköpfe (241) den M Zeilen von Sonden (222) in der Sondenanordnung des Sondenmechanismus (220) entsprechen und der Beschichtungsmechanismus (240) ferner Folgendes umfasst:
M Anpassungsabschnitte (244), die den M Beschichtungsköpfen (241) entsprechend angeordnet sind, wobei der Anpassungsabschnitt (244) konfiguriert ist, die Größe des Auslasses (243), der mit dem entsprechenden Beschichtungskopf (241) verbunden ist, auf der Grundlage der Flächendichte, die durch die entsprechende Sonde (222) geprüft wird, anzupassen.

13. Einrichtung (200) nach Anspruch 12, **dadurch gekennzeichnet, dass** der Anpassungsabschnitt (244) einen Anpassungsblock (2441) und eine Ansteuervorrichtung (2442) dafür umfasst, wobei die Ansteuervorrichtung (2442) konfiguriert ist, den Anpassungsblock (2441) anzusteuern, sich in der Dickenrichtung (Z) der Elektrodenplatte (100) zu bewegen, um die Größe des Auslasses (243), der mit dem entsprechenden Beschichtungskopf (241) verbunden ist, durch den Anpassungsblock (2441) anzupassen;
bevorzugt **dadurch gekennzeichnet, dass** ein Teil des Anpassungsblocks (2441), der das Material berührt, Größen W3 und L3 in der Breitenrichtung (X) bzw. der Längsrichtung (Y) aufweist, wobei 10 mm ≤ W3 ≤ 30 mm und/oder 5 mm ≤ L3 ≤ 20 mm; und
stärker bevorzugt **dadurch gekennzeichnet, dass** L3 ein ganzzahliges Vielfaches von L2 ist, wobei L2 die Größe des Signalempfangsfensters jeder Sonde (222) in der Sondenanordnung in der Längsrichtung (Y) ist.

14. Einrichtung (200) nach Anspruch 13, **dadurch gekennzeichnet, dass** eine Bewegungsentfernung der Ansteuervorrichtung (2442) in der Dickenrichtung (Z) der Elektrodenplatte (100) kleiner oder gleich 200 mm ist.

15. Einrichtung (200) nach einem der Ansprüche 1 bis 14, **dadurch gekennzeichnet, dass** die Einrichtung (200) ferner eine erste Übertragungswalze (250) und eine zweite Übertragungswalze (260) umfasst, wobei die erste Übertragungswalze (250) und die zweite Übertragungswalze (260) jeweils auf zwei Seiten des Trägerrahmens (230) in der Längsrichtung (Y) angeordnet sind und die erste Übertragungswalze (250) und die zweite Übertragungswalze (260) konfiguriert sind, die Elektrodenplatte (100) zu tragen,
bevorzugt **dadurch gekennzeichnet, dass** eine Entfernung zwischen der ersten Übertragungswalze (250) und der zweiten Übertragungswalze (260) kleiner oder gleich 800 mm ist; und/oder
**dadurch gekennzeichnet, dass** der Strahl ein Röntgenstrahl oder ein β-Strahl ist; und
bevorzugt **dadurch gekennzeichnet, dass** ein Leistungsbereich des Röntgenstrahls im Bereich von 200 mCi bis 5000 mCi liegt und/oder ein Leistungsbereich des β-Strahls im Bereich von 12 W bis 20 kW liegt.

## Revendications

1. Dispositif (200) pour tester des plaques-électrode, ledit dispositif (200) comprenant :
un mécanisme de rayonnement (210), le mécanisme de rayonnement (210) étant configuré pour émettre un rayon vers une plaque-électrode (100), le rayon étant orienté selon une direction de largeur (X) de la plaque-électrode (100) de manière à couvrir la plaque-électrode (100), et balayer la plaque-électrode (100) selon une direction de longueur (Y) de la plaque-électrode (100) ; et
un mécanisme de sondes (220), le mécanisme de sondes (220) et le mécanisme de rayonnement (210) étant disposés en regard l'un de l'autre, de part et d'autre de la plaque-électrode (100), le mécanisme de sondes (220) étant configuré pour surveiller un signal transmis à travers la plaque-électrode (100), et le signal étant utilisé pour tester la densité surfacique d'un matériau appliqué sur une surface de la plaque-électrode (100),
le mécanisme de rayonnement (210) comprenant :
une source de rayonnement configurée pour générer le rayon ; et
un premier boîtier (211), le premier boîtier (211) étant configuré pour accueillir la source de rayonnement, une fenêtre ouverte (2121) étant ménagée sur une surface du premier boîtier (211) tournée vers le mécanisme de sondes (220), et la fenêtre ouverte (2121) étant configurée pour transmettre le rayon ;
un premier collimateur (213), le premier collimateur (213) étant disposé entre la source de rayonnement et la plaque-électrode (100) afin de collimater le rayon émis par la source de rayonnement, le premier collimateur (213) comprenant une pluralité de déflecteurs, la pluralité de déflecteurs étant agencée selon la direction de largeur (X) et perpendiculairement à la surface de la plaque-électrode (100),
et le mécanisme de sondes (220) comprenant :
un réseau de sondes, le réseau de sondes comprenant M rangées × N colonnes de sondes (222), les M rangées de sondes (222) étant agencées dans la direction de largeur (X), et les N colonnes de sondes (222) étant agencées dans la direction de longueur (Y), M et N étant des entiers positifs ; et
un deuxième boîtier (221), le réseau de sondes étant disposé sur une paroi (2211) du deuxième boîtier (221) tournée vers le mécanisme de rayonnement (210),
un deuxième collimateur (224), le deuxième collimateur (224) étant disposé entre la plaque-électrode (100) et le réseau de sondes afin de collimater le signal transmis à travers la plaque-électrode (100) ;
le deuxième collimateur (224) comprenant une pluralité de déflecteurs, la pluralité de déflecteurs étant agencée selon la direction de largeur (X) et perpendiculairement à la surface de la plaque-électrode (100),
pendant un processus de test, le mécanisme de rayonnement (210) et le mécanisme de sondes (220) restant immobiles, et la plaque-électrode (100) se déplaçant selon sa direction de longueur (Y).

2. Dispositif (200) selon la revendication 1, le dispositif (200) étant **caractérisé en ce qu'**il comprend en outre un cadre de support (230), le cadre de support (230) étant pourvu d'une fenêtre (231), la fenêtre (231) étant perpendiculaire à la direction de longueur (Y) et, sur deux bords opposés de la fenêtre (231), le mécanisme de sondes (220) et le mécanisme de rayonnement (210) étant respectivement fixés avec un espacement entre eux, de manière à ce que la plaque-électrode (100) passe entre le mécanisme de rayonnement (210) et le mécanisme de sondes (220) à travers l'espacement ; et, de préférence,
**caractérisé en ce que** le cadre de support (230) est en marbre.

3. Dispositif (200) selon la revendication 1 ou 2, **caractérisé en ce que** la section transversale du faisceau de la source de rayonnement présente des dimensions W1 et L1 respectivement dans la direction de largeur (X) et dans la direction de longueur (Y), avec 20 mm ≤ L1 ≤ 50 mm, et/ou 200 mm ≤ W1 ≤ 1500 mm.

4. Dispositif (200) selon l'une des revendications 1 à 3, **caractérisé en ce que** chaque déflecteur de la pluralité de déflecteurs dans le premier collimateur (213) présente des dimensions d et H1 respectivement dans la direction de largeur (X) et dans une direction d'épaisseur (Z) de la plaque-électrode (100), avec 0,2 mm ≤ d ≤ 1 mm, et/ou 1 mm ≤ H1 ≤ 5 mmm,
de préférence,
**caractérisé en ce que**, dans la direction de largeur (X), le premier déflecteur et le dernier déflecteur parmi la pluralité de déflecteurs sont espacés d'un bord de la fenêtre ouverte (2121) de d/2, et/ou, dans la direction de longueur (Y), les deux extrémités de la pluralité de déflecteurs sont espacées du bord de la fenêtre ouverte (2121) de d/2.

5. Dispositif (200) selon l'une des revendications 1 à 4, **caractérisé en ce que** 1 ≤ N ≤ 10, et/ou 5 ≤ M ≤ 150.

6. Dispositif (200) selon l'une des revendications 1 à 5, **caractérisé en ce qu'**un espacement entre deux sondes (222) adjacentes dans le réseau de sondes est d, avec 0,2 mm ≤ d ≤ 1 mm.

7. Dispositif (200) selon l'une des revendications 1 à 6, **caractérisé en ce qu'**une distance entre deux déflecteurs adjacents de la pluralité de déflecteurs dans le deuxième collimateur (224) est le double de la distance entre deux déflecteurs adjacents de la pluralité de déflecteurs dans le premier collimateur (213).

8. Dispositif (200) selon l'une quelconque des revendications 5 à 7, **caractérisé en ce qu'**une fenêtre de réception de signal de chaque sonde (222) dans le réseau de sondes présente des dimensions W2 et L2 respectivement dans la direction de largeur (X) et dans la direction de longueur (Y), avec 1 mm ≤ W2 ≤ 20 mm, et/ou 1 mm ≤ L2 ≤ 40 mm ;
et/ou
**caractérisé en ce que** chaque déflecteur de la pluralité de déflecteurs dans le deuxième collimateur (224) présente des dimensions d et H2 respectivement dans la direction de largeur (X) et dans la direction d'épaisseur (Z) de la plaque-électrode (100), avec 0,2 mm ≤ d ≤ 1 mm, et/ou 1 mm ≤ H2 ≤ 5 mm.

9. Dispositif (200) selon l'une quelconque des revendications 1 à 8, **caractérisé en ce que**, dans la direction d'épaisseur (Z) de la plaque-électrode (100), une distance entre le mécanisme de sondes (220) et le mécanisme de rayonnement (210) est inférieure ou égale à 15 mm.

10. Dispositif (200) selon l'une quelconque des revendications 1 à 9, le dispositif (200) étant **caractérisé en ce qu'**il comprend en outre un mécanisme d'enduction (240), le mécanisme d'enduction (240) étant configuré pour enduire la surface de la plaque-électrode (100) avec le matériau.

11. Dispositif (200) selon la revendication 10, **caractérisé en ce que** le mécanisme d'enduction (240) comprend :
un rouleau d'enduction (242) configuré pour supporter la plaque-électrode (100) ; et
M têtes d'enduction (241), les M têtes d'enduction (241) étant agencées dans la direction de largeur (X) et disposées sur un côté du rouleau d'enduction (242) le plus éloigné du cadre de support (230), et les M têtes d'enduction (241) étant connectées respectivement à M sorties (243), les têtes d'enduction (241) étant configurées pour délivrer le matériau aux sorties (243) correspondantes,
de manière à appliquer le matériau sur la surface de la plaque-électrode (100) à travers les sorties (243).

12. Dispositif (200) selon la revendication 11, **caractérisé en ce que** les M têtes d'enduction (241) correspondent aux M rangées de sondes (222) dans le réseau de sondes du mécanisme de sondes (220), et le mécanisme d'enduction (240) comprend en outre :
M portions d'ajustement (244) disposées en correspondance avec les M têtes d'enduction (241), la portion d'ajustement (244) étant configurée pour ajuster la dimension de la sortie (243) connectée à la tête d'enduction (241) correspondante en fonction de la densité surfacique testée par la sonde (222) correspondante.

13. Dispositif (200) selon la revendication 12, **caractérisé en ce que** la portion d'ajustement (244) comprend un bloc d'ajustement (2441) et un appareil d'entraînement (2442) associé, l'appareil d'entraînement (2442) étant configuré pour entraîner le bloc d'ajustement (2441) pour le déplacer dans la direction d'épaisseur (Z) de la plaque-électrode (100) afin d'ajuster la dimension de la sortie (243) connectée à la tête d'enduction (241) correspondante par l'intermédiaire du bloc d'ajustement (2441) ;
de préférence,
**caractérisé en ce qu'**une partie du bloc d'ajustement (2441) en contact avec le matériau présente des dimensions W3 et L3 respectivement dans la direction de largeur (X) et dans la direction de longueur (Y), avec 10 mm ≤ W3 ≤ 30 mm, et/ou 5 mm ≤ L3 ≤ 20 mm ;
de préférence encore,
**caractérisé en ce que** L3 est un multiple entier de L2, L2 étant la dimension de la fenêtre de réception de signal de chaque sonde (222) dans le réseau de sondes dans la direction de longueur (Y).

14. Dispositif (200) selon la revendication 13, **caractérisé en ce qu'**une distance de déplacement de l'appareil d'entraînement (2442) dans la direction d'épaisseur (Z) de la plaque-électrode (100) est inférieure ou égale à 200 mm.

15. Dispositif (200) selon l'une quelconque des revendications 1 à 14, le dispositif (200) étant **caractérisé en ce qu'**il comprend en outre un premier rouleau de transfert (250) et un deuxième rouleau de transfert (260), le premier rouleau de transfert (250) et le deuxième rouleau de transfert (260) étant disposés respectivement de part et d'autre du cadre de support (230) dans la direction de longueur (Y), et le premier rouleau de transfert (250) et le deuxième rouleau de transfert (260) étant configurés pour supporter la plaque-électrode (100) ;
de préférence,
**caractérisé en ce qu'**une distance entre le premier rouleau de transfert (250) et le deuxième rouleau de transfert (260) est inférieure ou égale à 800 mm ;
et/ou
**caractérisé en ce que** le rayon est un rayon X ou un rayon β ;
de préférence,
**caractérisé en ce qu'**une plage de puissance du rayon X est de 200 mCi à 5000 mCi, et/ou une plage de puissance du rayon β est de 12 W à 20 kW.
